(19) Europäisches Patentamt / European Patent Office / Office européen des brevets

(11) **EP 2 826 626 B1**

(12) **EUROPEAN PATENT SPECIFICATION**

(45) Date of publication and mention
of the grant of the patent:
**20.01.2016 Bulletin 2016/03**

(51) Int Cl.:
**B41F 33/18** (2006.01) **B65H 26/02** (2006.01)
**G06F 11/25** (2006.01) **G06N 5/02** (2006.01)
**G06F 17/18** (2006.01) **G06F 17/00** (2006.01)

(21) Application number: **13176492.0**

(22) Date of filing: **15.07.2013**

(54) **Web break analysis system**

Bahnbruchanalysesystem

Système d'analyse de rupture de bande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.01.2015 Bulletin 2015/04**

(73) Proprietor: **Goss Contiweb B.V.
5831 AZ Boxmeer (NL)**

(72) Inventor: **Slaats, Paul
5685 DV Best (NL)**

(74) Representative: **Tischner, Oliver
Lavoix Munich
Bayerstrasse 83
80335 München (DE)**

(56) References cited:
**DE-A1-102005 049 896     US-A- 3 928 844
US-A- 6 098 063**

**Description**

The present invention pertains to a system for analysing web breaks in a web-fed printing press, comprising a plurality of sensing devices adapted to monitor properties of the web and operating parameters of the printing press, as well as to detect a web break, and to a method for analysing web breaks in a web-fed printing press.

Such a system and method are sold by the company Procemex Oy Ltd of Finland under the trade name "PROCEMEX-PRINT". A brochure describing said system and method can be downloaded at:

http://www.procemex.fi/images/stories/pdf/Procemex Print 2012 english LIGHT.pdf.

This known solution uses on press mounted high speed video cameras that continuously film the running web. In case of a web break, the cause of the break is determined by a human press operator reviewing the video data provided by the video cameras. Document US-A-6098063 discloses a system according to the preamble of claim 1.

However, manually reconstructing the likely cause of a web break by watching video data from numerous video cameras is tedious, time-consuming and error prone.

Furthermore, this known solution does not allow identifying web break causes that are not due to faults in the paper web.

An object of the present invention is therefore to provide a web break analysis system and method that allow easier and quicker determination of the likely cause of a web break.

This object is achieved by a system of the afore-mentioned type, characterised by

> 1) a database with a list of predetermined web break causes;
> 2) for each of the predetermined web break causes, a real cause probability calculation algorithm for calculating the probability that the corresponding predetermined web break cause is the real cause of a detected web break at least partially as a function of outputs delivered by said sensing devices, and
> 3) a real web break cause determining processor adapted to, upon detection of a web break:
>
>> a) execute each real cause probability calculation algorithm;
>> b) rank the predetermined web break causes according to their calculated real cause probabilities; and
>> c) identify the one or several web break causes amongst the predetermined web break causes with the highest real cause probability as the most likely cause for said detected web break.

This object is also achieved by a method of the afore-mentioned type, characterised by

> 1) providing a list of predetermined web break causes;
> 2) monitoring web properties and printing press operating parameters in said web fed printing press;
> 3) detecting a web break in said web-fed printing press;
> 4) calculating for each of the predetermined web break causes the probability that the corresponding predetermined web break cause is the real cause of the detected web break at least partially based on the results of said monitoring;
> 5) ranking the predetermined web break causes according to their calculated real cause probabilities; and
> 6) identifying the one or several web break causes amongst the predetermined web break causes with the highest real cause probability as the most likely cause for said detected web break.

According to preferred embodiments, the system of the invention has one or several of the following features, taken in isolation or in all technically possible combinations:

- each of said sensing devices includes one or more of the following: web tension sensor, web break position detecting sensor, web break time detecting sensor, web edge position sensor, web speed sensor, web fault detecting camera, printing press process state detector;
- the system is adapted to allow its user to modify the list of predetermined web break causes in said database.

Similarly, the method of the invention may include one or several of the following features:

- the monitoring and detecting includes the measurement of one or more of the following quantities: time of web break, location of web break in the printing press, web tension, web edge position, web faults, web speed, process state of the printing press;
- said detecting includes determining the time of said web break based on the detection of a loss of the web tension;
- said detecting includes determining the location of said web break based on the detection of the web edges;

- said calculating is also based on manual input provided by a printing press operator;
- the method is carried out using the system as described above.

The invention also relates to a web-fed printing press comprising a splicer, at least one printing unit, a folder and the system as described above, wherein said system includes one or more of the following:

1) a first web tension sensor inside the splicer and/or a second web tension sensor at the splicer exit;
2) one or more web break sensors between the printing units and/or inside the folder;
3) at least one camera, in particular a high resolution camera, inside the splicer for detecting web faults;

The printing press may be a heat set printing press, preferably including a dryer and/or a chiller.

- The system of the printing press may also include one or more of the following:

1) a third web tension sensor at the dryer exit, and/or a fourth web tension sensor at the chiller exit;
2) a left web edge position sensor and/or a right web edge position sensor inside the chiller;
3) one or more web edge sensors in the splicer.

The invention will be better understood when reading the following description of non limiting examples of the invention, with reference to the accompanying drawings, in which:

Figure 1 is a block diagram of the inventive web break analysis system;
Figure 2 shows one possible arrangement of the inventive system's sensors in a web-fed printing press; and
Figure 3 is a graph showing sensor readings for a web break caused by damage on the right side of a paper reel.

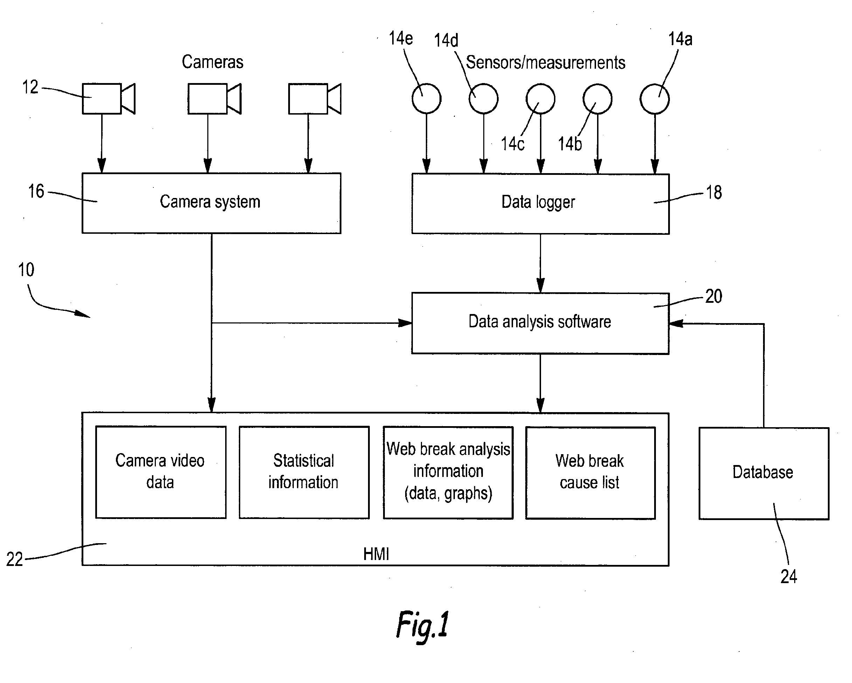

With reference to figure 1, there is shown a web break analysis system 10. System 10 includes a set of sensing devices 12, 14, several data processors 16 to 20, a human/machine interface (HMI) 22, and a database 24. In the shown exemplary embodiment, the sensing devices comprise high resolution cameras 12 (for detecting paper web faults, a web tension sensor 14a, a web break sensor 14b, a left web edge position sensor 14c, a right web edge position sensor 14d, and a web speed sensor 14e.

In the present context, a "high resolution" camera is a camera able to resolve paper defects down to a size of 1 x 1 mm on a running paper web and this preferably up to a paper web speed of 18 m/s over the full width of the paper web.

In alternative embodiments, the sensing devices may include additional or different sensors that can be useful for web break analysis. For example, web break analysis system 10 may also sense various common printing press operating parameters such as the current process state of the printing press (emergency stop, safe stop, impression on/off, washing on/off, splicing active, etc...) with a printing press process state detector.

The printing press process state detector may include proximity switches, limit switches and/or force sensors installed on the printing press. The printing press process state detector may also rely on outputs from the printing press, splicer and/or dryer control system software.

The sensing devices 12, 14 are adapted to be installed at desired locations on a web-fed printing press.

High resolution cameras 12 are connected to a camera system 16, namely a video signal processor. Sensors 14 are connected to a data logger 18 that collects and temporarily stores the data output from sensors 14. Data logger 18 is connected to a real web break cause determining processor 20. Real web break cause determining processor 20 is fitted with a data analysis software.

Database 24 is connected to real web break cause determining processor 20, allowing web break cause determining processor 20 to access database 24. Database 24 contains a list of predetermined web break causes. A predetermined web break cause is an event, which, by experience, is known to potentially result in a web break during operation of a web-fed printing press. Examples of such known web break causes are a hole or wrinkles in the paper web, or a bad splice in the paper web.

The data analysis software of real web break cause determining processor 20 includes a real cause probability calculation algorithm for each of the predetermined web break causes in the database list.

Camera system 16 and real web break cause determining processor 20 are both connected to a human-machine interface (HMI) 22. Typically, the HMI 22 includes one or more screens and some input means for the printing press operator. As shown in figure 1, the HMI 22 may be adapted to play back the video data captured by cameras 12, to provide statistical information on the monitored paper web, to display results of an analysis of a web break, and to provide a list of the most likely causes of a current web break.

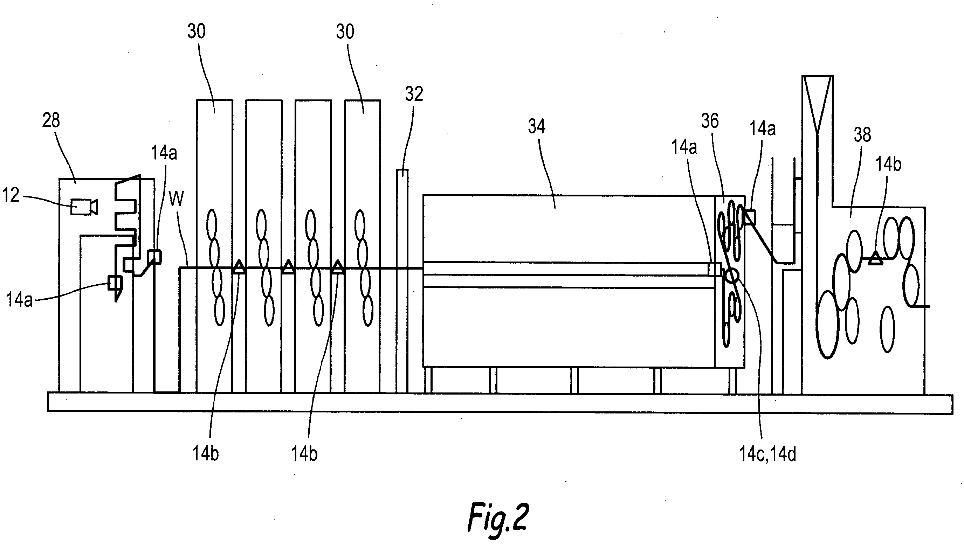

Figure 2 shows a web-fed heatset offset printing press 26 on which the inventive web break analysis system 10 may be installed. Web break analysis system 10 is a standalone system and can be installed as an add-on to any web-fed printing press. In particular, web break analysis system 10 can be retro-fitted to already existing and running web-fed printing presses.

Web-fed offset printing press 26 comprises a splicer 28, at least one, and for example four printing units 30, a web catcher 32, a dryer 34, a chiller 36, and a folder 38. The paper web running through printing press 26 is referenced by the letter W.

The cameras 12 and sensors 14 of web break analysis system 10 can be fitted on printing press 26 as follows:

- one or more cameras 12 (depending on the width of the paper web W) are installed inside splicer 28 and are adapted to monitor the unprinted paper web W for paper faults such as holes or wrinkles;
- a first web tension sensor 14a is located inside splicer 28, a second web tension sensor 14a is located at the splicer exit, a third web tension sensor 14a is arranged at the dryer exit, and a fourth web tension sensor 14a is located at the chiller exit;
- a left web edge position sensor 14c and a right web edge position sensor 14d are mounted inside chiller 36; and
- web break sensors 14b are located each time between two printing units 30, and additional web break sensors are mounted inside folder 38.

Optionally, web edge position sensors are also installed in the splicer 28 and are part of the web break analysis system 10.

The following is an explanation on how the inventive web break analysis system 10 is capable of identifying the true cause of a detected web break.

Example 1: web break caused by damage on the right side of the paper reel

A web-fed printing press is fitted with the inventive web break analysis system 10. In this example, web break analysis system 10 includes a web speed sensor, a right web edge position sensor and a left web edge position sensor inside the printing press' splicer, as well as several web break time and position sensors arranged along the printing press.

A paper web with a tear on its right edge is unwound from a reel and fed into the printing press. Somewhere inside the printing press 26, the tear propagates transversely through the entire paper web, resulting in a web break.

Web break analysis system 10 detects the web break and calculates for each of the known web break causes mentioned in database 24 its "real cause probability", i.e. the probability that the corresponding web break cause is the true cause of the web break. The probability calculations are done using the signals received from the various sensors of web break analysis system 10.

Web break analysis system 10 will also determine a real cause probability for the cause "paper fault" stored in database 24. More precisely, web break analysis system 10 will compare the position of the web break in the printing press provided by one of the web break position sensors with the position of the tear in the printing press at the time of web break. If the two positions match, then web break analysis system 10 will assign a high real cause probability (e.g. 80%) to the predetermined web break cause "paper fault". If the positions are substantially different, then web break analysis system 10 will assign a low real cause probability (e.g. 10%) to the predetermined web break cause "paper fault".

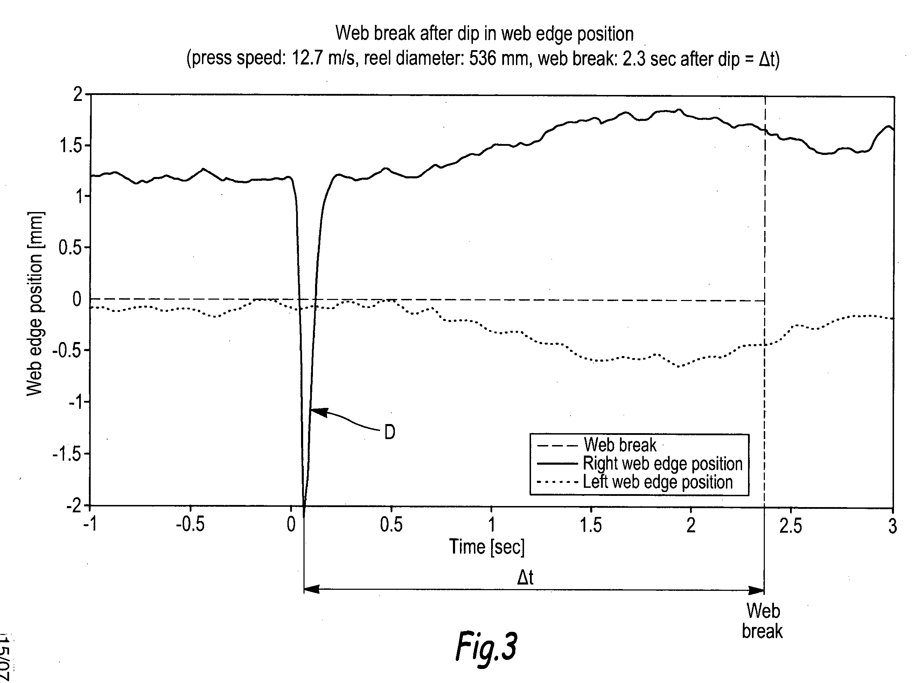

Figure 3 is a graph showing the outputs of the right web edge position sensor (solid line), of the left web edge position sensor (dotted line), and of the web break time sensor (dashed line) as a function of time. The dip D in the output of the right web edge position sensor corresponds to the tear in the paper web.

By measuring the time $\Delta t$ between the detection of the tear at the right web edge position sensor (i.e. at the splicer) and the web break, and by knowing the web speed from the web speed sensor, web break analysis system 10 can calculate the position of the tear at the time of web break.

Example 2: web break caused by a bad splice

Again, a web-fed printing press is fitted with the inventive web break analysis system 10. This time, the splicer of the printing press performs a bad splice that travels through the printing press and causes a web break. Web break analysis system 10 detects the web break at a certain location in the printing press. It then calculates for each of the known web break causes mentioned in database 24 its real cause probability.

Web break analysis system 10 will also determine a real cause probability for the cause "bad splice" stored in database 24. More precisely, web break analysis system 10 compares the break location with the location of the splice. If they are the same, it is very likely that the splice has been made badly thus causing the web to break. If the splice is around the break location (a few meters before or after), there still is a chance that it was the cause of the web break, but not as high when the locations match. If the splice is more meters away from the break location, the chance that it caused the break is almost 0%. Preferably, by also considering the process state of the printing press at the moment of the break, web break analysis system 10 can further improve the real cause probability calculation. For example, if the printing press was washing during splicing, the probability that the web break was caused by a bad splice is higher than if the printing press was printing during splicing.

Web break analysis system 10 can improve the real cause probability calculation even further by taking into account the web speed or web acceleration at the time of splicing. If the web was accelerating or decelerating during the splice, the real cause probability for the predetermined web break cause "bad splice" is higher than if the web speed was constant during the splice.

Tables 1-3 are simplified examples of real cause probability calculation matrices that might be used by web break analysis system 10 for calculating the real cause probability P of the predetermined web break cause "bad splice".

Table 1

| Base probability (B) in % | Break location | | | |
|---|---|---|---|---|
| **Splice location at time of web break** | Splicer | Print unit | Dryer | Folder |
| Splicer | 80 | 40 | 0 | 0 |
| Print unit | 40 | 80 | 40 | 0 |
| Dryer | 0 | 40 | 80 | 40 |
| Folder | 0 | 0 | 40 | 80 |

Table 2

| Process state of printing press at time of web break | 1st probability multiplier (M1, from 0-100) |
|---|---|
| Washing | 80 |
| Printing | 50 |

Table 3

| Web speed during splicing | 2nd probability multiplier (M2, from 0-100) |
|---|---|
| Increasing | 80 |
| Constant | 50 |
| Decreasing | 80 |

Using its sensor readings, web break analysis system 10 can look up the base probability B, the 1st probability multiplier M1, and the second probability multiplier M2 in tables 1 to 3 for the predetermined web break cause "bad splice". A corresponding real cause probability score S can then be calculated with the following equation:

$$S = B \times (1 + M1/100) \times (1 + M2/100)$$

For example, if the sensors of web break analysis system 10 indicate that the web break occurred in the dryer and the location of the splice at the time of web break was also in the dryer, then web break analysis system sets B = 80, according to table 1. If, at the time of web break, the printing press was printing, then web break analysis system 10 sets M1 = 50, according to table 2. Finally, if, during splicing, the speed of the web was increasing, then web break analysis system sets M2 = 80, according to table 3. Web break analysis system 10 then obtains S = 80 x 1.5 x 1.8 = 216.

A real cause probability score $S_i$ is determined for each of a total t of possible predetermined web break causes $C_i$. The real cause probability $P_i$ for each possible predetermined web break cause $C_i$ is then calculated with the following equation:

$$P_i = S_i / \sum_{n=1}^{n=t} S_n$$

Continuing the example, we assume that there is only one other possible web break cause (e.g. "hole in paper web") with a corresponding P = 80. Hence, web break analysis system 10 determines P1 = 216 / (216 + 80) = 0.73 as the value for the real cause probability of the predetermined web break cause "bad splice". Likewise, web break analysis system 10 determines P2 = 80 / (216 + 80) = 0.27 as the value for the real cause probability of the predetermined web break cause "hole in paper web".

In a preferred embodiment, web break analysis system 10 may be adapted to allow its user to modify the list of predetermined web break causes in database 24 as well as the base probabilities B and the probability multipliers M.

Preferably, web break analysis system 10 is also capable of self-learning, e.g. by automatically optimising the base probabilities B and the probability multipliers M based on data collected during previous web breaks.

The invention has also the following general aspects:

The invention applies to any web fed printing press, in particular a heat-set web fed printing press with dryer and chiller, or a cold-set web fed printing press without any dryer or chiller. It applies also to digital and/or offset print units.

While the algorithm has been described being implemented using software, it can also be implemented using conventional means and/or hard wired using an integrated circuit.

**Claims**

1. A system (10) for analysing web breaks in a web-fed printing press (26), comprising a plurality of sensing devices (12, 14) adapted to monitor properties of the web and operating parameters of the printing press, as well as to detect a web break, **characterised by**:

    1) a database (24) with a list of predetermined web break causes;
    2) for each of the predetermined web break causes, a real cause probability calculation algorithm for calculating the probability that the corresponding predetermined web break cause is the real cause of a detected web break at least partially as a function of outputs delivered by said sensing devices (12, 14); and
    3) a real web break cause determining processor (20) adapted to, upon detection of a web break,:

        a) execute each real cause probability calculation algorithm;
        b) rank the predetermined web break causes according to their calculated real cause probabilities; and
        c) identify the one or several web break causes amongst the predetermined web break causes with the highest real cause probability as the most likely cause for said detected web break.

2. The system of claim 1, wherein each of said sensing devices (12, 14) includes one or more of the following: web tension sensor (14a), web break position detecting sensor, web break time detecting sensor, web edge position sensor (14c, 14d), web speed sensor (14e), web fault detecting camera (12), printing press process state detector.

3. The system of any one of the previous claims, wherein the system (10) is adapted to allow its user to modify the list of predetermined web break causes in said database (24).

4. A web-fed printing press (26) comprising a splicer (28), at least one printing unit (30), a folder (38) and the system (10) of any one of the previous claims, wherein said system includes one or more of the following:

    1) a first web tension sensor (14a) inside the splicer and/or a second web tension sensor (14a) at the splicer exit;
    2) one or more web break sensors (14b) between the printing units and/or inside the folder;
    3) at least one camera (12), in particular a high resolution camera, inside the splicer for detecting web faults.

5. The printing press of claim 4, the printing press being a heat set printing press, preferably including a dryer (34) and/or a chiller (36).

6. The printing press of claim 5, wherein said system includes one or more of the following:

    1) a third web tension sensor (14a) at the dryer exit, and/or a fourth web tension sensor (14a) at the chiller exit;
    2) a left web edge position sensor (14c) and/or a right web edge position sensor (14d) inside the chiller;
    3) one or more web edge sensors in the splicer (28).

7. A method for analysing web breaks in a web-fed printing press (26), **characterised by** the consecutive steps of:

1) providing a list of predetermined web break causes;

2) monitoring web properties and printing press operating parameters in said web-fed printing press (26);

3) detecting a web break in said web-fed printing press;

4) calculating for each of the predetermined web break causes the probability that the corresponding predetermined web break cause is the real cause of the detected web break at least partially based on the results of said monitoring;

5) ranking the predetermined web break causes according to their calculated real cause probabilities; and

6) identifying the one or several web break causes amongst the predetermined web break causes with the highest real cause probability as the most likely cause for said detected web break.

8. The method of claim 7, wherein said monitoring and detecting includes the measurement of one or more of the following quantities: time of web break, location of web break in the printing press, web tension, web edge position, web faults, web speed, process state of the printing press.

9. The method of claim 7 or 8, wherein said detecting includes determining the time of said web break based on the detection of a loss of the web tension.

10. The method of any one of claims 7 to 9, wherein said detecting includes determining the location of said web break based on the detection of the web edges.

11. The method of any one of claims 7 to 10, wherein said calculating is also based on manual input provided by a printing press operator.

12. The method of any one of claims 7 to 11 carried out using the system of any one of claims 1 to 3.

**Patentansprüche**

1. System (10) zum Analysieren von Bahnrissen in einer Rollendruckmaschine (26), das eine Mehrzahl von Erfassungseinrichtungen (12, 14) umfasst, die so ausgelegt sind, dass sie Eigenschaften der Bahn und Betriebsparameter der Druckmaschine überwachen und auch einen Bahnriss erkennen, **gekennzeichnet durch**:

1) eine Datenbank (24) mit einer Liste von vordefinierten Bahnrissursachen;

2) einen Algorithmus zur Berechnung der Wahrscheinlichkeit der echten Ursache für jede der vordefinierten Bahnrissursachen, um die Wahrscheinlichkeit zu berechnen, dass die entsprechende vordefinierte Bahnrissursache die echte Ursache für einen erkannten Bahnriss ist, und zwar zumindest teilweise als Funktion von Ausgaben, die von den Erfassungseinrichtungen (12, 14) zugeführt werden; und

3) einen Prozessor (20) zum Ermitteln der echten Bahnrissursache, der so ausgelegt ist, dass er bei Erkennen eines Bahnrisses:

a) jeden Algorithmus zur Berechnung der Wahrscheinlichkeit der echten Ursache ausführt;

b) die vordefinierten Bahnrissursachen gemäß ihren berechneten Wahrscheinlichkeiten der echten Ursache in eine Rangliste einordnet; und

c) die eine oder mehreren Bahnrissursachen unter den vordefinierten Bahnrissursachen mit der höchsten Wahrscheinlichkeit der echten Ursache als die höchstwahrscheinliche Ursache für den erkannten Bahnriss identifiziert.

2. System nach Anspruch 1, wobei jede der Erfassungseinrichtungen (12, 14) eines oder mehreres des Folgenden beinhaltet: einen Bahnspannungssensor (14a), einen Bahnrisspositions-Erkennungssensor, einen Bahnrisszeitpunkt-Erkennungssensor, einen Bahnrandpositionssensor (14c, 14d), einen Bahngeschwindigkeitssensor (14e), eine Bahnfehlererkennungskamera (12) und eine Druckmaschinenprozessstatus-Erkennungseinheit.

3. System nach einem der vorstehenden Ansprüche, wobei das System (10) so ausgelegt ist, dass es seinem Benutzer das Modifizieren der Liste von vordefinierten Bahnrissursachen in der Datenbank (24) ermöglicht.

4. Rollendruckmaschine (26), die einen Spleißer (28), zumindest eine Druckeinheit (30), eine Falzeinrichtung (38) und das System (10) nach einem der vorstehenden Ansprüche umfasst, wobei das System eines oder mehreres des Folgenden beinhaltet:

1) einen ersten Bahnspannungssensor (14a) innerhalb des Spleißers und/oder einen Bahnspannungssensor (14a) am Spleißerausgang;

2) einen oder mehrere Bahnrisssensoren (14b) zwischen den Druckeinheiten und/oder innerhalb der Falzeinrichtung;

3) zumindest eine Kamera (12), insbesondere eine Hochauflösungskamera, innerhalb des Spleißers zum Erkennen von Bahnfehlern.

5. Druckmaschine nach Anspruch 4, wobei die Druckmaschine eine Heatset-Druckmaschine ist, die vorzugsweise einen Trockner (34) und/oder einen Kühler (36) beinhaltet.

6. Druckmaschine nach Anspruch 5, wobei das System eines oder mehreres des Folgenden beinhaltet:

1) einen dritten Bahnspannungssensor (14a) am Trocknerausgang und/oder einen vierten Bahnspannungssensor (14a) am Kühlerausgang;

2) einen linken Bahnrandpositionssensor (14c) und/oder einen rechten Bahnrandpositionssensor (14d) innerhalb des Kühlers;

3) einen oder mehrere Bahnrandsensoren im Spleißer (28).

7. Verfahren zum Analysieren von Bahnrissen in einer Rollendruckmaschine (26), das durch die aufeinander folgenden Schritte gekennzeichnet ist:

1) Bereitstellen einer Liste von vordefinierten Bahnrissursachen;

2) Überwachen von Bahneigenschaften und Druckbetriebsparametern in der Rollendruckmaschine (26);

3) Erkennen eines Bahnrisses in der Rollendruckmaschine;

4) Berechnen der Wahrscheinlichkeit, dass die entsprechende vordefinierte Bahnrissursache die echte Ursache für einen erkannten Bahnriss ist, für jede der vordefinierten Bahnrissursachen, und zwar zumindest teilweise auf Basis der Ergebnisse des Überwachens;

5) Reihen der vordefinierten Bahnrissursachen gemäß deren berechneten Wahrscheinlichkeiten der echten Ursache; und

6) Identifizieren der einen oder mehreren Bahnrissursachen unter den vordefinierten Bahnrissursachen mit der höchsten Wahrscheinlichkeit der echten Ursache als die höchstwahrscheinliche Ursache für den erkannten Bahnriss.

8. Verfahren nach Anspruch 7, wobei das Überwachen und das Erkennen das Messen einer oder mehrerer der folgenden Quantitäten beinhaltet: Bahnrisszeitpunkt, Position des Bahnrisses in der Druckmaschine, Bahnspannung, Bahnrandposition, Bahnfehler, Bahngeschwindigkeit, Prozessstatus der Druckmaschine.

9. Verfahren nach Anspruch 7 oder 8, wobei das Erkennen das Ermitteln des Bahnrisszeitpunkts auf Basis des Erkennens eines Bahnspannungsverlusts beinhaltet.

10. Verfahren nach einem der Ansprüche 7 bis 9, wobei das Erkennen das Ermitteln der Position des Bahnrisses auf Basis des Erkennens der Bahnränder beinhaltet.

11. Verfahren nach einem der Ansprüche 7 bis 10, wobei das Berechnen auch auf der manuellen Eingabe durch einen Druckmaschinenbediener erfolgt.

12. Verfahren nach einem der Ansprüche 7 bis 11, das unter Verwendung des Systems nach einem der Ansprüche 1 bis 3 durchgeführt wird.

**Revendications**

1. Système (10) pour analyser des ruptures de bande dans une presse à imprimer alimentée par bande (26), comprenant une pluralité de dispositifs de détection (12, 14) aptes à surveiller les propriétés de la bande et des paramètres de fonctionnement de la presse à imprimer, ainsi qu'à détecter une rupture de bande, **caractérisé par** :

1) une base de données (24) présentant une liste de causes de rupture de bande prédéterminées ;

2) pour chacune des causes de rupture de bande prédéterminées, un algorithme de calcul de probabilité de cause réelle destiné à calculer la probabilité que la cause de rupture de bande prédéterminée correspondante soit la cause réelle d'une rupture de bande détectée, au moins partiellement en fonction de résultats délivrés par lesdits dispositifs de détection (12, 14) ; et

3) un processeur de détermination de causes de rupture de bande réelles (20) apte à, suite à la détection d'une rupture de bande :

a) exécuter chaque algorithme de calcul de probabilité de cause réelle ;

b) classer les causes de rupture de bande prédéterminées selon leurs probabilités de causes réelles calculées ; et

c) identifier ladite une ou plusieurs causes de rupture de bande parmi les causes de rupture de bande prédéterminées présentant la probabilité de cause réelle la plus élevée comme étant la cause la plus probable de ladite rupture de bande détectée.

2. Système selon la revendication 1, dans lequel chacun desdits dispositifs de détection (12, 14) comprend un ou plusieurs des éléments suivants: un capteur de tension de bande (14a), un capteur de détection de position de rupture de bande, un capteur de détection d'instant de rupture de bande, un capteur de position de bordure de bande (14c, 14d), un capteur de vitesse de bande (14e), une caméra de détection de défauts de bande (12), un détecteur d'état de processus de presse à imprimer.

3. Système selon l'une quelconque des revendications précédentes, dans lequel le système (10) est apte à permettre à son utilisateur de modifier la liste de causes de rupture de bande prédéterminées dans ladite base de données (24).

4. Presse à imprimer alimentée par bande (26) comprenant un dérouleur-encolleur (28), au moins une unité d'impression (30), une plieuse (38) et le système (10) selon l'une quelconque des revendications précédentes, dans lequel ledit système comprend un ou plusieurs des éléments suivants :

1) un premier capteur de tension de bande (14a) à l'intérieur du dérouleur-encolleur, et/ou un deuxième capteur de tension de bande (14a) à la sortie du dérouleur-encolleur ;

2) un ou plusieurs capteurs de rupture de bande (14b) entre les groupes d'impression et/ou à l'intérieur de la plieuse ;

3) au moins une caméra (12), en particulier une caméra à haute résolution, à l'intérieur du dérouleur-encolleur, en vue de détecter les défauts de bande.

5. Presse à imprimer selon la revendication 4, dans laquelle la presse à imprimer est une presse à imprimer par fixation thermique, incluant de préférence un sécheur (34) et/ou un refroidisseur (36).

6. Presse à imprimer selon la revendication 5, dans laquelle ledit système comprend un ou plusieurs des éléments suivants :

1) un troisième capteur de tension de bande (14a) à la sortie du sécheur, et/ou un quatrième capteur de tension de bande (14a) à la sortie du refroidisseur ;

2) un capteur de position de bordure de bande gauche (14c) et/ou un capteur de position de bordure de bande droite (14d) à l'intérieur du refroidisseur ;

3) un ou plusieurs capteurs de bordure de bande dans le dérouleur-encolleur (28).

7. Procédé d'analyse de ruptures de bande dans une presse à imprimer alimentée par bande (26), **caractérisé par** les étapes consécutives ci-dessous consistant à :

1) fournir une liste de causes de rupture de bande prédéterminées ;

2) surveiller des propriétés de bande et des paramètres de fonctionnement de presse à imprimer dans ladite presse à imprimer alimentée par bande (26) ;

3) détecter une rupture de bande dans ladite presse à imprimer alimentée par bande ;

4) calculer, pour chacune des causes de rupture de bande prédéterminées, la probabilité que la cause de rupture de bande prédéterminée correspondante soit la cause réelle de la rupture de bande détectée, au moins partiellement sur la base des résultats de ladite surveillance ;

5) classer les causes de rupture de bande prédéterminées selon leurs probabilités de causes réelles calculées ; et

6) identifier ladite une ou plusieurs causes de rupture de bande parmi les causes de rupture de bande prédéterminées présentant la probabilité de cause réelle la plus élevée comme étant la cause la plus probable de ladite rupture de bande détectée.

8. Procédé selon la revendication 7, dans lequel ladite surveillance et ladite détection incluent la mesure d'une ou plusieurs des quantités suivantes : un instant de la rupture de bande, un emplacement de la rupture de bande dans la presse à imprimer, une tension de la bande, une position de bordure de bande, des défauts de bande, une vitesse de bande, un état de processus de la presse à imprimer.

9. Procédé selon la revendication 7 ou 8, dans lequel ladite détection inclut la détermination de l'instant de ladite rupture de bande sur la base de la détection d'une perte de tension de la bande.

10. Procédé selon l'une quelconque des revendications 7 à 9, dans lequel ladite détection inclut la détermination de l'emplacement de ladite rupture de bande sur la base de la détection des bordures de bande.

11. Procédé selon l'une quelconque des revendications 7 à 10, dans lequel ledit calcul est également basé sur une entrée manuelle fournie par un opérateur de presse à imprimer.

12. Procédé selon l'une quelconque des revendications 7 à 11, mis en oeuvre en utilisant le système selon l'une quelconque des revendications 1 à 3.

*Fig.1*

EP 2 826 626 B1

Fig.2

Web break after dip in web edge position
(press speed: 12.7 m/s, reel diameter: 536 mm, web break: 2.3 sec after dip = Δt)

*Fig.3*

EP 2 826 626 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6098063 A